# EUROPÄISCHE PATENTSCHRIFT

(11) **EP 1 753 631 B1**
(45) Veröffentlichungstag und Bekanntmachung des Hinweises auf die Patenterteilung: **23.02.2011**
(21) Anmeldenummer: 04787112.4
(22) Anmeldetag: 09.09.2004
(51) Int. Cl.: B62K 25/04, B60G 17/016, G01C 9/00, B60T 8/00

(54) **VERFAHREN ZUR BESTIMMUNG DES NEIGUNGSWINKELS EINES ZWEIRADES SOWIE VERFAHREN ZUR NIVEAUREGULIERUNG EINES GEFEDERTEN ZWEIRADES**
METHOD FOR DETERMINING THE ANGLE OF INCLINATION OF A TWO-WHEELED VEHICLE AND METHOD FOR CONTROLLING THE LEVEL OF A SUSPENDED TWO-WHEELED VEHICLE
PROCEDE DE DETERMINATION DE L'ANGLE D'INCLINAISON D'UNE BICYCLETTE ET PROCEDE DE CORRECTION D'ASSIETTE D'UNE BICYCLETTE SUSPENDUE

(30) Priorität: 03.05.2004 DE 102004021590
(43) Veröffentlichungstag der Anmeldung: 21.02.2007
(73) Patentinhaber: Continental Teves AG & Co. oHG, 60488 Frankfurt (DE)
(72) Erfinder: KRAUß, Hans-Peter, 30826 Garbsen-Freilingen (DE)
(74) Vertreter: Finger, Karsten
(86) Internationale Anmeldenummer: PCT/EP2004/052100
(87) Internationale Veröffentlichungsnummer: WO 2005/107358

(56) Entgegenhaltungen:
- EP-A- 0 769 701
- WO-A-02/20318
- DE-A1- 4 011 976
- DE-A1- 4 138 831
- DE-A1- 10 220 575
- DE-C2- 4 143 599
- SU-A1- 1 530 897
- US-A- 4 568 101
- PATENT ABSTRACTS OF JAPAN Bd. 2000, Nr. 20, 10. Juli 2001 (2001-07-10) -& JP 2001 074449 A (HONDA MOTOR CO LTD), 23. März 2001 (2001-03-23)
- PATENT ABSTRACTS OF JAPAN Bd. 2002, Nr. 05, 3. Mai 2002 (2002-05-03) -& JP 2002 005657 A (DAIHATSU MOTOR CO LTD), 9. Januar 2002 (2002-01-09)

## Beschreibung

Die Erfindung betrifft ein Verfahren zur Niveauregulierung eines gefederten Zweirades, insbesondere eines Motorrades, bei dem in Abhängigkeit von dem Einfederweg das Niveau des Zweirades angepasst wird, wobei zur Bestimmung des Neigungswinkels des Zweirades während der Fahrt mit einem in Ausrichtung zu der Hochachse des Zweirades angeordneten Sensor erhaltene Sensordaten an eine Auswerteeinheit übermittelt werden.

Aus der EP 0 769 701 A1 ist eine Vorrichtung zur Erfassung einer Fahrzeugneigung bekannt, bei der über zwei versetzt zueinander angeordnete Querbeschleunigungssensoren, die in einem definierten Winkel zur Horizontalebene des Fahrzeuges angeordnet sind, mit Hilfe einer Differenz- und Summenbildung der beiden Sensorsignale die Fahrzeugneigung und hieraus die tatsächliche Fahrzeugbeschleunigung berechnet wird. Eine solche Vorrichtung ist nur bei mehrspurigen Fahrzeugen einzusetzen.

Aus der DE 40 11 976 C2 ist eine Steuervorrichtung für Schwingungsdämpfer bekannt, bei der über Vertikalbeschleunigungssensoren die Vertikalbeschleunigung von Fahrzeugen ermittelt wird. Auf der Grundlage der ermittelten Vertikalbeschleunigung wird die Dämpfungskraft der Stoßdämpfer eingestellt.

Aus der US 4,568,101 ist ein Federungssystem für Motorräder bekannt, mit dem das Fahrzeugniveau in Abhängigkeit von der Fahrgeschwindigkeit angepasst werden kann. Zum Aufsteigen auf das Fahrzeug kann dieses abgesenkt werden, während des Fahrbetriebes, insbesondere bei engen Kurvenfahrten, kann das Niveau des Motorrades angehoben werden.

In den Patent Abstracts of Japan, Bd 2000, Nr. 20, 10. Juli 2001 (2001-07-10) & JP 2001 074449 A ist eine Vorrichtung zur Erkennung der Neigung eines Kraftfahrzeuges offenbart, bei der während der Fahrt mit Querbeschleunigungssensoren (lateral accelerometer) erhaltene Sensordaten an eine Auswerteeinheit übermittelt werden und dort mit Hilfe von Sensordaten aus einem Rollgeschwindigkeitssensor umgerechnet bzw. integriert werden. Das Verfahren ist für vierrädrige Fahrzeuge offenbart und recht kompliziert.

Die DE 102 20 575 A1 offenbart ein Verfahren zur Erkennung einer überhöhten Kurve oder einer Steilwandkurve für insbesondere ein zweispuriges Fahrzeug, bei dem aus einer Beschleunigung des Fahrzeugaufbaus in einer zur Fahrbahn senkrechten Richtung in Verbindung mit einer durch Lenkwinkelmessung erkannten Kurvenfahrt auf das Befahren einer überhöhten Kurve geschlossen wird. Nachteiligerweise können nur recht große Neigungswinkel gemessen werden.

Die EP 0 603 612 A1 offenbart ein Antiblockierregelsystem für Motorräder, bei dem bei größer werdender Schräglage der Vorderradbremsdruck nach einer bestimmten Funktion verringert wird. Dazu sind am Fahrzeug zwei Beschleunigungssensoren angebracht, die die horizontale und die vertikale Beschleunigung messen. Auch hier ist der regelungstechnische uns apparative Aufwand erheblich.

Die DE 100 39 978 A1 offenbart eine Vorrichtung zum Messen des Neigungswinkels und/oder der Beschleunigung von Fahrzeugen und Zweirädern, bei der zwei zueinander orthogonale Beschleunigungssensoren vorgesehen sind, die verschiedene Winkel zu Hochachse einnehmen und senkrecht zur Geräteachse angeordnet sind. Auch hier sind mindestens zwei Sensoren erforderlich.

Die DE 102 32 362 A1 offenbart ein Verfahren zur Stabilisierung einspuriger Kraftfahrzeuge, bei dem das Signal eines Querbeschleunigungssensors ausgewertet wird und abhängig davon das Bremsmoment an mindestens einem Rad reduziert wird. Eine weitergehende Regelung ist nicht offenbart.

Aufgabe der Erfindung ist es, ein Verfahren zur Bestimmung des Neigungswinkels eines Zweirades während der Fahrt und damit ein Verfahren zur Niveauregulierung bereitzustellen, mit dem auf einfache und sichere Art und Weise der Neigungswinkel und eine Kurvenfahrt eines Zweirades ermittelt werden kann.

Erfindungsgemäß wird diese Aufgabe durch ein Verfahren mit den Merkmalen des Anspruchs 1 gelöst. Vorteilhafte Weiterbildungen der Erfindung sind in den abhängigen Ansprüchen beschrieben.

Das erfindungsgemäße Verfahren sieht vor, dass der Sensor als Vertikalbeschleunigungssensor ausgebildet ist, der mit einer Auswerteeinheit gekoppelt ist, die aus dem Verhältnis der Erdbeschleunigung zu der gemessenen Beschleunigung entlang der Hochachse des Zweirades den Neigungswinkel des Zweirades errechnet wird. Während üblicherweise eine Kurvenfahrt bei einem mehrspurigen Kraftfahrzeug über Querbeschleunigungssensoren ermittelt wird, sind diese bei einem Zweirad, insbesondere Motorrad, nicht wirkungsvoll, da aufgrund der Schräglage während der Kurvenfahrt die Querbeschleunigungen kompensiert werden, so dass die Beschleunigungen in Richtung der Hochachse verlaufen. Dies führt dazu, dass während der Kurvenfahrt durch die Fliehkräfte das Zweirad einfedert. Durch einen Vertikalbeschleunigungssensor werden die Beschleunigungen entlang der Hochachse gemessen und in der Auswerteeinheit wird über den Cosinus der Erdbeschleunigung und der gemessenen Beschleunigung entlang der Hochachse die momentane Neigung des Zweirades ausgerechnet. Durch die Vorrichtung wird gleichzeitig die Kurvenfahrt eines Zweirades ermittelt, da nur bei einer Schräglage während des Fahrbetriebes eine zur Erdbeschleunigung erhöhte Beschleunigung entlang der Hochachse des Zweirades auftritt.

Weiterhin ist erfindungsgemäß vorgesehen, dass der Vertikalbeschleunigungssensor in Ausrichtung zu der Hochachse des Zweirades an dem Zweirad angeordnet ist, so dass unmittelbar die entlang der Hochachse wirkende Beschleunigung gemessen werden kann. Sofern der Beschleunigungssensor nicht in Ausrichtung zu der Hochachse des Zweirades ausgerichtet ist, müssten Kompensationsroutinen in der Auswerteeinheit vorgesehen sein, um die Schrägstellung des Beschleunigungssensors auszugleichen. Eine Kalibrierung des Sensors ist in Abhängigkeit von der Ausrichtung zu der Hochachse möglich.

Vorteilhafterweise ist der Vertikalbeschleunigungssensor auf einer Platine eines Steuergerätes angeordnet oder in der Auswerteeinheit untergebracht, so dass kein separates Gehäuse für den Vertikalbeschleunigungssensor vorgesehen werden muss. Das erfindungsgemäße Verfahren sieht dabei vor, dass zur Bestimmung des Neigungswinkels eines Zweirades während der Fahrt mit einem Sensor die Sensordaten an eine Auswerteeinheit übermittelt werden, wobei die Beschleunigungen entlang der Hochachse des Zweirades von einem Vertikalbeschleunigungssensor gemessen werden und diese Beschleunigungen ins Verhältnis zu der Erdbeschleunigung gesetzt werden. Aus dem Verhältnis der Erdbeschleunigung zu der gemessenen Beschleunigung wird der Neigungswinkel des Zweirades errechnet, indem vorzugsweise der Neigungswinkel über die Kosinusfunktion ermittelt wird.

Zur Niveauregulierung eines gefederten wird dabei in Abhängigkeit von dem Einfederweg das Niveau des Zweirades angepasst. In Abhängigkeit von dem Neigungswinkel des Zweirades wird die Niveauregulierung deaktiviert, um zu verhindern, dass bei einer Kurvenfahrt, wenn durch die Fliehkräfte das Zweirad einfedert, eine ungewollte Nachregelung des Niveaus durchgeführt wird. Beispielsweise bei einer langen Kurve wirken erhebliche Kräfte auf das Fahrwerk, was bei einer aktivierten Niveauregulierung als eine zusätzliche Belastung gedeutet werden kann, die systemgemäß zu einer Anpassung des Zweiradniveaus führen würde. Dies würde zu einer Anhebung des Zweirades und damit zu einer Schwerpunktsveränderung während der Fahrt führen, was aus fahrsicherheitstechnischen Gründen unerwünscht ist.

Eine Weiterbildung der Erfindung sieht vor, dass eine Deaktivierung der Niveauregulierung in Abhängigkeit von der Fahrgeschwindigkeit erfolgt, also dass erst ab bestimmten Fahrgeschwindigkeiten die Niveauregulierung deaktiviert wird. Somit wird sichergestellt, dass während des Stehens des Zweirades eine Niveauregulierung durchgeführt werden kann, wohingegen eine Anpassung des Niveaus während der Fahrt ausbleibt.

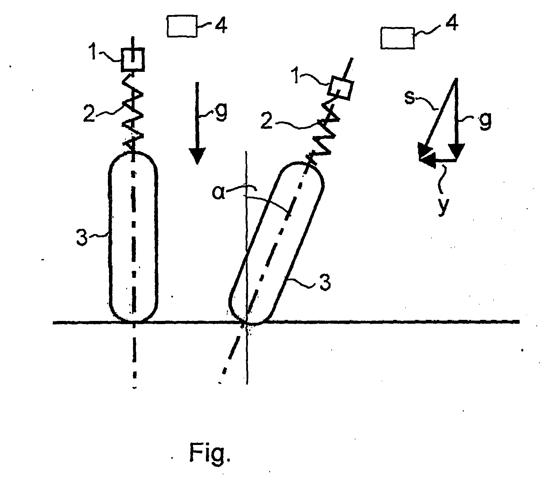

Nachfolgend wird ein Ausführungsbeispiel der Erfindung anhand der einzigen Figur näher erläutert, in der schematisch die Anordnung eines Neigungswinkelsensors bei Geradeausfahrt und Kurvenfahrt gezeigt ist.

In der linken Darstellung der Figur ist schematisch ein Zweirad in Geradeausfahrt dargestellt, bei dem über einen Vertikalbeschleunigungssensor 1 die Vertikalbeschleunigung gemessen wird. Der Vertikalsensor 1 und der gesamte Rahmen ist über eine Federung 2 mit den Rädern 3 gekoppelt. Während der Geradeausfahrt, wie sie in der linken Darstellung gezeigt ist, entspricht die Vertikalbeschleunigung der Erdbeschleunigung g, wie es durch den Pfeil angedeutet ist. Dieser Wert wird einer Auswerteeinheit 4 übermittelt. Bei Übereinstimmung des von dem Vertikalbeschleunigungssensor 1 gemessenen Wertes mit der Erdbeschleunigung g liegt keine Schräglage des Fahrzeuges vor, so dass davon ausgegangen wird, dass das Zweirad geradeaus fährt.

In der rechten Darstellung der Figur durchfährt das Zweirad eine Kurve, was aufgrund der Zentrifugalkräfte zu einer Einfederung der Feder 2 führt. Die Hochachse des Zweirades ist um den Winkel α zur Vertikalen geneigt und der Reifen 3 muss neben der Gewichtskraft auch noch Querkräfte übertragen. Dabei wirken auf den Sensor 1 die Beschleunigung entlang der Hochachse, die durch den Pfeil S dargestellt ist. Diese Beschleunigung entlang der Hochachse setzt sich aus der Erdbeschleunigung g und der Querbeschleunigung y zusammen. Diese bilden ein rechtwinkliges Dreieck, bei dem zwischen der Erdbeschleunigung g und der Beschleunigung S entlang der Hochachse der Neigungswinkel α auftritt. Aus der Beziehung zwischen der Erdbeschleunigung g und der entlang der Hochachse wirkenden Beschleunigung S kann über die Kosinusfunktion der Neigungswinkel α errechnet werden.

Darüber hinaus ist es möglich, die Querbeschleunigung y über den Satz des Pythagoras bei bekannten Größen S und g auszurechnen.

Bei einer Kurvenfahrt mit einer Neigung um den Winkel α wirken somit größere Beschleunigungskräfte S auf den Vertikalbeschleunigungssensor 1 als während einer Geradeausfahrt. Das Verhältnis zwischen diesen Beschleunigungen dient als Maß für die Neigung des Zweirades. Darüber hinaus können die Querbeschleunigungen y, die während der Kurvenfahrt wirken, einfach berechnet werden.

Durch das Erkennen eines Neigungswinkels aufgrund einer Kurvenfahrt, weil die entlang der Hochachse wirkenden Beschleunigungskräfte größer als die Erdbeschleunigung sind, wird verhindert, dass die Kurvenfahrt als ein zu niedriges Niveau bei Fahrzeugen mit einer Niveauregulierung interpretiert wird, so dass eine ungewollte Nachregelung des Niveaus verhindert wird.

Vorteilhafterweise werden bei einer Ausrichtung des Vertikalbeschleunigungssensors 1 entlang der Hochachse des Zweirades nur diejenigen Schräglagen eines Zweirades berücksichtigt, die zu erhöhten Beschleunigungen entlang der Hochachse führen, so dass bei Schrägstellung des Fahrzeuges während des Stillstandes oder bei einer langsamen Fahrt keine Deaktivierung der Niveauregulierung erfolgt.

Die Querbeschleunigungswerte sowie der ermittelte Neigungswinkel können anderen Anwendungen, beispielsweise des ABS zugänglich gemacht werden, so dass während einer Kurvenfahrt eine andere Steuerung des ABS-Systems durchgeführt wird, um ein Stürzen aufgrund blockierender Räder zu verhindern. Ebenso ist die Darstellung einer Schräglagenanzeige im Cockpit denkbar.

## Patentansprüche

1. Verfahren zur Niveauregulierung eines gefederten Zweirades, insbesondere Motorrades, bei dem in Abhängigkeit von dem Einfederweg das Niveau des Zweirades angepaßt wird, wobei Sensordaten eines in Ausrichtung zu der Hochachse des Zweirades angeordneten, als Vertikalbeschleunigungssensor ausgebildeten Sensors (1) an eine Auswerteeinrichtung (4) übermittelt werden, **dadurch gekennzeichnet, dass** in der Auswerteeinheit der Neigungswinkel (α) des Zweirades aus dem Verhältnis der Erdbeschleunigung (g) zu der gemessenen Beschleunigung (S) entlang der Hochachse des Zweirades errechnet wird, wobei in Abhängigkeit von dem Neigungswinkel (α) des Zweirades die Niveauregulierung deaktiviert wird.

2. Verfahren nach Anspruch 1, **dadurch gekennzeichnet, dass** eine Deaktivierung der Niveauregelanlage in Abhängigkeit von der Fahrgeschwindigkeit des Zweirades erfolgt.

3. Verfahren nach Anspruch 1 oder 2, **dadurch gekennzeichnet, dass** der Neigungswinkel (α) über die Cosinus-Funktion errechnet wird.

## Claims

1. Method for controlling the ride level of a suspended two-wheeled vehicle, in particular a motor cycle, in which the ride level of the two-wheeled vehicle is adapted as a function of the spring compression travel, wherein sensor data of a sensor (1), which is arranged aligned with the vertical axis of the two-wheeled vehicle and is embodied as a vertical acceleration sensor, are transmitted to an evaluation device (4), **characterized in that** the angle of inclination (α) of the two-wheeled vehicle is calculated in the evaluation unit from the ratio of the gravitational acceleration (g) to the measured acceleration (S) along the vertical axis of the two-wheeled vehicle, wherein the ride level control system is deactivated as a function of the angle of inclination (α) of the two-wheeled vehicle.

2. Method according to Claim 1, **characterized in that** the ride level control system is deactivated as a function of the velocity of the two-wheeled vehicle.

3. Method according to Claim 1 or 2, **characterized in that** the angle of inclination (α) is calculated by means of the cosine function.

## Revendications

1. Procédé de régulation de l'assiette d'un véhicule deux roues à suspension, notamment d'une motocyclette, dans lequel l'assiette du véhicule deux roues est adaptée en fonction de la course de compression, des données de capteur d'un capteur (1) disposé en alignement par rapport à l'axe vertical du véhicule deux roues, réalisé sous forme de capteur d'accélération verticale, étant communiquées à un dispositif d'analyse (4), **caractérisé en ce que**, dans l'unité d'analyse, l'angle d'inclinaison (α) du véhicule deux roues est calculé à partir du rapport entre l'accélération terrestre (g) et l'accélération mesurée (S) le long de l'axe vertical du véhicule deux roues, la régulation de l'assiette étant désactivée en fonction de l'angle d'inclinaison (α) du véhicule deux roues.

2. Procédé selon la revendication 1, **caractérisé en ce qu'**une désactivation de l'installation de régulation d'assiette a lieu en fonction de la vitesse de conduite du véhicule deux roues.

3. Procédé selon la revendication 1 ou 2, **caractérisé en ce que**.l'angle d'inclinaison (α) est calculé par le biais de la fonction cosinus.
